# EUROPÄISCHE PATENTSCHRIFT

(11) **EP 2 800 165 B1**
(45) Veröffentlichungstag und Bekanntmachung des Hinweises auf die Patenterteilung: **08.06.2016**
(21) Anmeldenummer: 14164253.8
(22) Anmeldetag: 10.04.2014
(51) Int. Cl.: H01M 2/12, H01M 2/10

(54) **Batterie mit einer Sollbruchstellen aufweisenden Abdeckung**
Battery with a cover provided with intended breaking points
Batterie dotée d'un revêtement présentant des points de rupture

(30) Priorität: 03.05.2013 DE 102013208137
(43) Veröffentlichungstag der Anmeldung: 05.11.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: Hore, Sarmimala, 70174 Stuttgart (DE); Butzmann, Stefan, 58579 Schalksmühle (DE); Fink, Holger, 70567 Stuttgart (DE)
(74) Vertreter: Bee, Joachim

(56) Entgegenhaltungen:
- EP-A1- 2 388 846
- DE-A1-102010 039 976
- JP-A- 2011 154 957

## Beschreibung

Die vorliegende Erfindung betrifft eine Batterie, welche mindestens zwei nebeneinander angeordnete Batteriezellen aufweist, welche jeweils ein Entgasungselement aufweisen, wobei die Batterie ferner eine Abdeckung umfasst, welche dazu ausgebildet ist, zumindest einen Teil der Oberflächen der Batteriezellen abzudecken sowie die Entgasungselemente der Batteriezellen luftdicht abzudecken und welche jeweils im Bereich der Entgasungselemente den Entgasungselementen zuordenbare Sollbruchstellen aufweist.

### Stand der Technik

Batterie-Packs oder Batterien, insbesondere Lithium-Ionen-Batterie-Packs beziehungsweise Lithium-Ionen-Batterien für automobile Anwendungen, werden derzeit aus Lithium-Ionen-Batteriezellen im VDA-Hard-Case-Format gefertigt. Mit anderen Worten ausgedrückt, weisen die Batterien des Standes Technik heute insbesondere Lithium-Ionen-Batteriezellen auf, welche jeweils in sogenannten Hardcase-Batteriezellengehäusen, also in Batteriezellengehäusen, welche eine Hartschale aufweisen, angeordnet sind. Üblicherweise besitzen derartige Batteriezellen ein Batteriezellengehäuse, welches teilweise oder vollständig aus Aluminium besteht. Um das von den Batterie-Packs beziehungsweise Batterien bereitstellbare Spannungsniveau beziehungsweise die von den Batterie-Packs beziehungsweise Batterien bereitstellbare Stromstärke zu erhöhen, werden die einzelnen Batteriezellen innerhalb des Batterie-Packs beziehungsweise innerhalb der Batterie in Reihe und/oder parallel miteinander zu Batteriemodulen verschaltet. Diese Batteriemodule können dann wiederum untereinander zu Batterie-Packs beziehungsweise zu Batterien verschaltet werden.

Durch unsachgemäßen Umgang, beispielsweise durch eine Überladung, durch eine Beschädigung oder durch Fehler zum Beispiel im Aufbau, welche beispielsweise zu batterieintern auftretenden Kurzschlüssen oder Verunreinigungen führen, können die Batterien beziehungsweise deren Batteriezellen in einen kritischen Zustand gelangen. Werden die Batterien beziehungsweise die einzelnen Batteriezellen dann nicht rechtzeitig aus diesem Zustand befreit, kann dies zu einem thermischen Durchgehen der Batteriezellen und somit zu einer starken Beschädigung derselben führen. Aus diesem Grund sind im Stand der Technik innerhalb der Batteriezellengehäuse der Batteriezellen sogenannte Entgasungselemente verbaut, welche jeweils dazu ausgebildet sind, innerhalb der jeweiligen Batteriezelle entstehende Gase bei Vorliegen eines vorbestimmten Gasdrucks aus der jeweiligen Batteriezelle abzulassen. Auf diesem Wege werden also Gase und mitgerissene Partikel bei Vorliegen eines vorbestimmten Überdrucks aus einer beispielsweise beschädigten Batteriezelle abgeführt und so ein thermisches Durchgehen derselben verhindert. In der Regel ist dieser Vorgang mit einer starken Wärmeentwicklung verbunden. Dabei entgast eine Batteriezelle mit geöffnetem Entgasungselement meist direkt in die Batterie beziehungsweise in das Batterie-Pack, in welchem die jeweilige Batteriezelle verbaut ist. Alternativ dazu wird das entweichende Gas über offene oder geschlossene Systeme wie beispielsweise Entgasungskanäle gesammelt und abgeleitet.

Bei solchen Systemen besteht allerdings wiederum die Gefahr, dass die aus einer beschädigten Batteriezelle austretenden Stoffe benachbarte Batteriezellen angreifen und sich durch die Wärmeentwicklung innerhalb der Batterie beziehungsweise innerhalb des Batterie-Packs die Temperaturen der zuvor intakten Batteriezellen bis in einen unzulässigen Bereich hinein erhöhen, wodurch diese ebenfalls Schaden nehmen können. Beispielsweise wird in der US 2012/00941564 A1 ein solches System beziehungsweise eine Einrichtung zum Schutz der Batteriezellen bei einem Entgasungsevent beschrieben, bei welchem die Entgasungselemente der Batteriezellen, welche in der US 2012/00941564 A1 als Berstmembranen ausgeführt sind, ungeschützt innerhalb eines Entgasungskanals liegen.

### Offenbarung der Erfindung

Erfindungsgemäß wird eine Batterie zur Verfügung gestellt, welche mindestens zwei nebeneinander angeordnete Batteriezellen umfasst, welche jeweils in einem Batteriezellengehäuse angeordnet sind und jeweils mindestens ein Batteriezellenterminal aufweisen. Ferner umfasst die Batterie je Batteriezelle ein Entgasungselement, welches jeweils innerhalb des der jeweiligen Batteriezelle zugehörigen Batteriezellengehäuses angeordnet und dazu ausgebildet ist, innerhalb der jeweiligen Batteriezelle entstehende Gase bei Vorliegen eines vorbestimmten Gasdruckes aus der jeweiligen Batteriezelle abzulassen. Des Weiteren weist die Batterie eine Abdeckung auf, welche dazu ausgebildet ist, zumindest einen Teil der Oberflächen der Batteriezellen abzudecken sowie die Entgasungselemente der Batteriezellen luftdicht abzudecken. Erfindungsgemäß weist die Abdeckung jeweils im Bereich der Entgasungselemente den Entgasungselementen zuordenbare Sollbruchstellen auf.

Kommt es zum Beispiel im laufenden Betrieb der erfindungsgemäßen Batterie zu einer Entgasung einer Batteriezelle der Batterie durch deren Entgasungselement, beispielsweise aufgrund des Vorliegens von Übertemperaturen oder nach einem Unfall, so stellt die Abdeckung während dieses Entgasungsvorgangs einen Schutz für die intakten, also für die nicht entgasenden Batteriezellen dar. Somit können durch aus der entgasenden Batteriezelle austretende Stoffe beziehungsweise aufgrund der entstehenden Hitze keine weiteren Batteriezellen der Batterie beschädigt werden. Folglich wird eine Kettenreaktion beim thermischen Durchgehen einer Batteriezelle verhindert. Gleichzeitig wird durch die Sollbruchstellen in der Abdeckung das Entgasen der betroffenen Batteriezelle nicht verhindert.

Bevorzugt sind die Sollbruchstellen jeweils dazu ausgebildet zu brechen, sobald es zu einem Ablassen von Gas durch das der jeweiligen Sollbruchstelle zugehörige Entgasungselement kommt. Mit anderen Worten ausgedrückt, ist bevorzugt jede Sollbruchstelle dazu ausgebildet zu brechen, sobald es zu einem Ablassen von Gas oder einer Entgasung durch das der Sollbruchstelle zuordenbare Entgasungselement kommt. Dabei sind die Sollbruchstellen bevorzugt jeweils in einem Bereich der Abdeckung angeordnet, welcher jeweils ein Entgasungselement einer Batteriezelle luftdicht abschließt. Es existieren also zwei Zustände, in welchen sich die Abdeckung der erfindungsgemäßen Batterie befinden kann. In einem ersten Zustand sind alle Sollbruchstellen intakt. Kommt es zu einem Bersten beispielsweise eines Entgasungselementes einer Batteriezelle der Batterie, so strömt das aus dem Entgasungselement dieser Batteriezelle austretende Gas mit einem vorbestimmten Druck gegen die dem Entgasungselement zuordenbare Sollbruchstelle der Abdeckung, woraufhin diese bricht. Sind eine oder mehrere Sollbruchstellen gebrochen, befindet sich die Abdeckung im zweiten Zustand. In diesem zweiten Zustand kann das aus dem Entgasungselement der betroffenen Batteriezelle entweichende Gas auch durch die Abdeckung strömen. Die anderen Entgasungselemente der intakten Batteriezellen sind immer noch durch die Abdeckung luftdicht geschützt beziehungsweise abgedeckt, sodass das entweichende, meist heiße Gas der beschädigten Batteriezelle nicht in die Entgasungselemente intakter Batteriezellen eindringen kann. Die erfindungsgemäße Batterie ist somit im Vergleich zu Batterien des Standes der Technik besser vor thermischem Durchgehen beziehungsweise besser vor einer durch thermisches Durchgehen ausgelösten, mehrere Batteriezellen beschädigenden Kettenreaktion geschützt.

Vorzugsweise sind die Sollbruchstellen durch Perforierungen innerhalb der Abdeckung realisiert. Durch derartige Perforierungen kann die für das Brechen der Sollbruchstellen benötigte Kraft beziehungsweise der für das Brechen der Sollbruchstellen benötigte Druck genau eingestellt werden.

Ferner bevorzugt sind die Sollbruchstellen durch lokale Verkleinerungen der Dicke der Abdeckung realisiert. Derartige lokale Verkleinerungen der Dicke der Abdeckung lassen sich sehr einfach realisieren und müssen ferner nicht nachträglich in die Abdeckung eingebracht werden. Somit kann die Abdeckung vorteilhaft in einem Arbeitsschritt gefertigt werden, ohne nachbehandelt werden zu müssen.

In einer bevorzugten Ausführungsform sind die Sollbruchstellen durch lokale Minimierungen der Dicke der Abdeckung realisiert. Mit anderen Worten ausgedrückt, ist die Abdeckung im Bereich der Sollbruchstellen bevorzugt auf ein Minimum reduziert. Mit solchen Ausführungsbeispielen kann besonders gut sichergestellt werden, dass eine Entgasung einer Batteriezelle über ihr Entgasungselement zu einem Bruch der diesem Entgasungselement zuordenbaren Sollbruchstelle führt.

Vorzugsweise sind die Sollbruchstellen als inselartige Abschnitte der Abdeckung ausgeführt, welche die den Sollbruchstellen zuordenbaren Entgasungselemente jeweils zumindest teilweise überdecken. Mit anderen Worten ausgedrückt, sind die Sollbruchstellen bevorzugt als Teilbereiche der Abdeckung ausgeführt, welche unmittelbar über den den Sollbruchstellen zuordenbaren Entgasungselementen liegen und diese bei einer gedachten senkrechten Projektion der Entgasungselemente auf beziehungsweise in die Abdeckung teilweise oder vollständig überlappen.

Bevorzugt weist die Abdeckung die Form einer Platte auf. In einer derartigen Ausführungsform kann die Batterie sehr kompakt ausgeführt werden, da die Abdeckung flach auf den Batteriezellen aufliegt und über den Batteriezellen nur einen geringen Raum einnimmt.

Vorzugsweise weist die Abdeckung Aussparungen auf, durch welche jeweils ein Batteriezellenterminal der von der Abdeckung abgedeckten Batteriezellen hindurchführbar ist. Dadurch ist die Abdeckung auf besonders einfache und platzsparende Weise mit den Batteriezellen verbindbar.

Erfindungsgemäß besteht die Abdeckung zumindest teilweise aus einem chemisch beständigen Material. In einer solchen Ausführungsform sind im Falle einer Entgasung einer der Batteriezellen der Batterie die verbleibenden intakten Batteriezellen besser vor einem Eindringen von Gas und insbesondere besser vor einer Einwirkung durch Hitze geschützt.

Ferner besteht die Abdeckung zumindest teilweise aus einem wärmeisolierenden und/oder wärmereflektierenden Material. In einer solchen Ausführungsform sind im Falle einer Entgasung einer der Batteriezellen der Batterie die verbleibenden intakten Batteriezellen besonders gut vor einem Eindringen von Gas und insbesondere besser vor einer Einwirkung durch Hitze geschützt.

In einer Weiterentwicklung einer dieser Ausführungsformen ist das Material für die Abdeckung gewählt aus einer Gruppe, welche Aerogele und Keramiken umfasst. Aerogele sind hochporöse Festkörper, bei denen bis zu 99,98 % des Volumens aus Poren bestehen. Während es sich bei Aerogelen um chemisch sehr beständige, wärmeisolierende Materialien handelt, fungieren Keramiken als guter Hitzeschild. Ferner bevorzugt umfassen die verwandten Keramiken Zirkonerde, also Zirkonoxid. Ferner bevorzugt handelt es sich bei den verwandten Aerogelen um Polymer-Aerogele, also um Polymere, welche Kieselerde beziehungsweise Siliziumdioxid und/oder Polyimide aufweisen. Aerogele sind gute Wärmeisolatoren und chemisch inert.

Ferner wird ein Kraftfahrzeug mit einer erfindungsgemäßen Batterie bereitgestellt, wobei die Batterie mit einem Antriebssystem des Kraftfahrzeugs verbunden ist.

Bevorzugt weist die erfindungsgemäße Batterie Lithium-Ionen-Batteriezellen auf.

Bevorzugt ist die Batterie eine Lithium-Ionen-Batterie.

Vorteilhafte Weiterbildungen der Erfindung sind in den Unteransprüchen angegeben und in der Beschreibung beschrieben.

### Zeichnungen

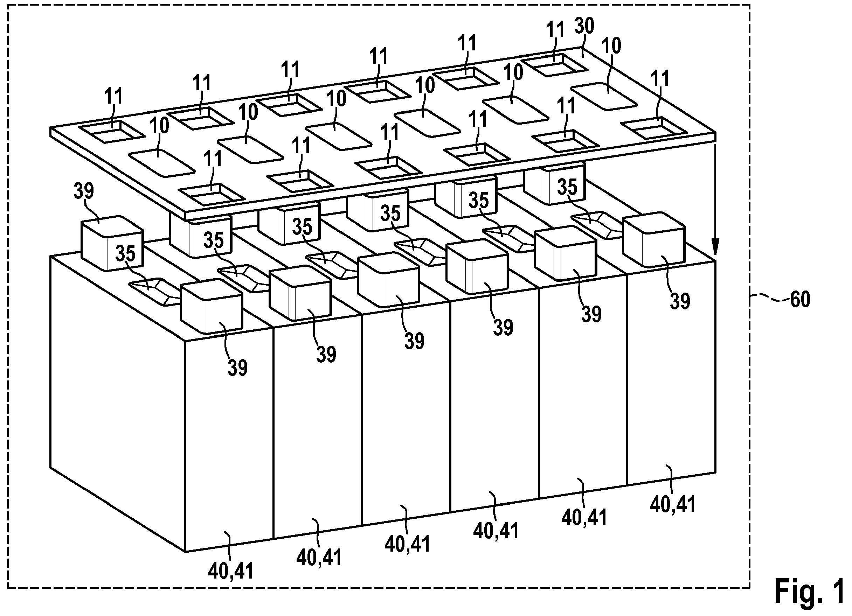

Ausführungsbeispiele der Erfindung werden anhand der Zeichnungen und der nachfolgenden Beschreibung näher erläutert. Es zeigt die einzige Figur 1 ein Ausführungsbeispiel einer erfindungsgemäßen Batterie mit von den Batteriezellen der Batterie gelöster Abdeckung.

### Ausführungsformen der Erfindung

In der Figur 1 ist ein Ausführungsbeispiel einer erfindungsgemäßen Batterie 60 mit von den Batteriezellen 40 der Batterie 60 gelöster Abdeckung 30 dargestellt. Mit anderen Worten ausgedrückt, ist die in Figur 1 dargestellte erfindungsgemäße Batterie 60 in einem unvollständig zusammengebauten Zustand dargestellt. Die folgende Beschreibung ist allerdings auf eine erfindungsgemäße Batterie 60 im vollständig zusammengebauten Zustand gerichtet, in welchem die Abdeckung 30 fest mit den Batteriezellen 40 der erfindungsgemäßen Batterie 60 verbunden ist. In dem in Figur 1 dargestellten Ausführungsbeispiel ist das Batteriegehäuse sowie eine Vielzahl in Figur 1 nicht abgebildeter Komponenten der Batterie 60 lediglich über eine gestrichelte Linie angedeutet. In dem Ausführungsbeispiel der Figur 1 umfasst die Batterie 60 rein beispielhaft mehrere Batteriemodule, welche ihrerseits jeweils eine Vielzahl von nebeneinander angeordneten Batteriezellen 40 aufweisen und von denen eines in Figur 1 dargestellt ist. Die Batteriezellen 40 sind jeweils in einem Batteriezellengehäuse 41 angeordnet und weisen in diesem Ausführungsbeispiel rein beispielhaft jeweils zwei Batteriezellenterminals 39 auf. Jede Batteriezelle 40 weist ein Entgasungselement 35 auf, welches jeweils innerhalb des der Batteriezelle 40 zugehörigen Batteriezellengehäuses 41 angeordnet ist. Jedes Entgasungselement 35 ist dazu ausgebildet, innerhalb der jeweils zugehörigen Batteriezelle 40 entstehende Gase bei Vorliegen eines vorbestimmten Gasdruckes aus der jeweiligen Batteriezelle 40 abzulassen. Mit anderen Worten ausgedrückt, weist jede der innerhalb der Batterie 60 verbauten Batteriezellen 40 ein Entgasungselement 35 auf, welche in diesem Ausführungsbeispiel rein beispielhaft jeweils in den Deckeln der Batteriezellengehäuse 41 der Batteriezellen 40, jeweils zwischen den Batteriezellenterminals 35 der Batteriezellen 40 verbaut sind. In diesem Ausführungsbeispiel sind die Entgasungselemente 35 rein beispielhaft als Berstmembranen ausgeführt. Es können allerdings auch erfindungsgemäße Batterien 60 ausgeführt sein, in welchen die Entgasungselemente 35 anders, beispielsweise als Überdruckventile oder aber auch ganz anders ausgeführt sind. Erreicht der Gasdruck innerhalb einer der Batteriezellen 40 einen vorbestimmten Wert, so birst das Entgasungselement 35 dieser Batteriezelle 40 beziehungsweise kommt es zu einer Entgasung dieser Batteriezelle 40, sodass das in dieser Batteriezelle 40 enthaltende Gas sowie der in dieser Batteriezelle 40 enthaltende Elektrolyt aus dem Entgasungselement 35 entweichen kann.

Die erfindungsgemäße Batterie 60 weist ferner eine Abdeckung 30 auf, welche in diesem Ausführungsbeispiel rein beispielhaft dazu ausgebildet ist, die batteriezellenterminalseitigen Oberflächen der Batteriezellen 40 abzudecken sowie alle Entgasungselemente 35 der Batteriezellen 40 luftdicht abzudecken. In Figur 1 ist die Abdeckung 30 zu Anschauungszwecken schwebend über dem gezeigten Batteriemodul dargestellt. Im zusammengebauten Zustand der erfindungsgemäßen Batterie 60 ist die Abdeckung 30 in diesem Ausführungsbeispiel rein beispielhaft lediglich dazu ausgebildet, die dargestellten Batteriezellen 40, also die Batteriezellen 40 nur eines, also des gezeigten Batteriemoduls abzudecken. Es können allerdings auch erfindungsgemäße Batterien 60 realisiert werden, in welchen die Abdeckung 30 dazu ausgebildet ist, die Batteriezellen 40 mehrerer oder aller Batteriemodule der Batterie 60 gleichzeitig abzudecken, oder aber auch nur einige der Batteriezellen 40 eines Batteriemoduls abzudecken. Ferner können auch erfindungsgemäße Batterien 60 ausgeführt werden, in welchen die Abdeckung 30 nicht nur zu einer Abdeckung der batteriezellenterminalseitigen Oberflächen der Batteriezellen 40 ausgebildet ist, sondern auch noch zu einer Abdeckung weiterer oder aller Oberflächen der Batteriezellen 40 ausgebildet ist. Die Abdeckung 30 der Batteriezellen 40 ist, wie bereits erwähnt, ferner dazu ausgebildet, die Entgasungselemente 35 der Batteriezellen 40 luftdicht abzudecken, das heißt, luftdicht zu verschließen.

Die Abdeckung 30 weist jeweils im Bereich der Entgasungselemente 35 den Entgasungselementen 35 zuordenbare Sollbruchstellen 10 auf. Mit anderen Worten ausgedrückt, weist die Abdeckung 30 der Batterie 60 eine Vielzahl von Sollbruchstellen 10 auf, von denen im vollständig zusammengebauten Zustand der Batterie 60 jeweils eine genau einem Entgasungselement 35 eineindeutig zugeordnet werden kann und umgekehrt. Die Zuordnung kann dabei beispielsweise über die lokale Distanz zwischen den Sollbruchstellen 10 und den Entgasungselementen 35 erfolgen, sodass eine Sollbruchstelle 10 beispielsweise dem ihr am nächsten gelegenen Entgasungselement 35 zugeordnet werden kann. Mit anderen Worten ausgedrückt, liegt jeweils genau eine Sollbruchstelle 10 der Abdeckung 30 jeweils in einem der Bereiche der Abdeckung 30, welche jeweils genau ein Entgasungselement 35 luftdicht abdecken.

In diesem Ausführungsbeispiel sind die Sollbruchstellen 10 jeweils dazu ausgebildet zu brechen, sobald es zu einem Ablassen von Gas durch das der jeweiligen Sollbruchstelle 10 zugehörige Entgasungselement 35 kommt. Mit anderen Worten ausgedrückt, ist in diesem Ausführungsbeispiel rein beispielhaft jede der Sollbruchstellen 10 dazu ausgebildet zu brechen beziehungsweise zu bersten, sobald es zu einer Entgasung durch das der Sollbruchstelle 10 zugeordnete Entgasungselement 35 kommt. Kommt es also zu einem thermischen Durchgehen einer Batteriezelle 40 und infolge dessen zu einer Erhöhung des Gasdrucks innerhalb dieser Batteriezelle 40 bis hin zu dem vorbestimmten Gasdruck, so birst oder öffnet das Entgasungselement 35 dieser Batteriezelle 40. Es kommt, mit anderen Worten ausgedrückt, zu einem Ausströmen von Gas aus dem Entgasungselement 35 der thermisch durchgehenden Batteriezelle 40, welches meist eine hohe Temperatur aufweist. Sehr schnell baut sich dann unter der dem Entgasungselement 35 der entgasenden Batteriezelle 40 zuordenbaren Sollbruchstelle 10 ein Druck auf, welcher zu einem Brechen dieser Sollbruchstelle 10 führt. Das meist heiße Gas aus der thermisch durchgehenden Batteriezelle 40 entweicht also in den Hohlraum, welcher zwischen der Abdeckung 30 und dem Batteriegehäuse der Batterie 60 gegeben ist (nicht dargestellt). Durch die Abdeckung 30 einschließlich der verbleibenden, noch intakten Sollbruchstellen 10 sind die anderen Batteriezellen 40 der Batterie 60 vor dem entwichenen Gas geschützt.

In diesem Ausführungsbeispiel weist die Abdeckung 30 rein beispielhaft die Form einer Platte auf. Es können allerdings auch erfindungsgemäße Batterien 60 mit Abdeckungen 30 ausgeführt sein, welche eine andere, also nicht die Form einer Platte aufweisen. Ferner sind die Sollbruchstellen 10 in diesem Ausführungsbeispiel rein beispielhaft als inselartige Abschnitte der Abdeckung 30 ausgeführt, welche die den Sollbruchstellen 10 zuordenbaren Entgasungselemente 35 im vollständig zusammengebauten Zustand der Batterie 60 jeweils vollständig überdecken. Die Sollbruchstellen 10 weisen in diesem Ausführungsbeispiel rein beispielhaft jeweils die Form von Rechtecken mit abgerundeten Ecken auf. Auch die Entgasungselemente 35 weisen in diesem Ausführungsbeispiel rein beispielhaft diese Form auf. Im vollständig zusammengebauten Zustand liegen die Sollbruchstellen 10 der Abdeckung 30 rein beispielhaft kongruent über den Entgasungselementen 35, sodass die Fläche der Entgasungselemente 35 vollständig von der Fläche der Sollbruchstellen 10 überdeckt ist.

In diesem Ausführungsbeispiel sind die Sollbruchstellen 10 rein beispielhaft durch lokale Verkleinerungen beziehungsweise genauer ausgedrückt durch lokale Minimierungen der Dicke der Abdeckung 30 realisiert. Mit anderen Worten ausgedrückt, sind die die Sollbruchstellen 10 ausbildenden und oben beschriebenen, inselartigen Abschnitte mit minimaler Wandstärke, also mit minimaler Dicke der Abdeckung 30 ausgeführt. Die minimale Dicke der Abdeckung 30 ist hier auf ein sinnvolles Maß beschränkt, das heißt auf eine Dicke, welche noch stark genug ist, um Erschütterungen der Batterie 60 standzuhalten, jedoch nur so stark ausgeführt ist, dass die Sollbruchstellen 10 bei Vorliegen eines vorbestimmten zweiten Gasdrucks brechen. In diesem Ausführungsbeispiel liegt der vorbestimmte zweite Gasdruck dabei rein beispielhaft unter dem vorbestimmten Gasdruck, ab welchem ein Entgasungselement 35 der Batteriezellen 40 zu bersten vermag. Es können allerdings auch andere erfindungsgemäße Batterien 60 ausgeführt sein, in welchen die Sollbruchstellen 10 innerhalb der Abdeckung auf andere Art und Weise, beispielsweise durch Perforierungen innerhalb der Abdeckung 30 oder aber auch ganz anders realisiert sind.

In diesem Ausführungsbeispiel weist die Abdeckung 30 des Weiteren in ihrer Form auf die Batteriezellenterminals 39 der Batteriezellen 40 abgestimmte Aussparungen 11 auf, durch welche jeweils ein Batteriezellenterminal 39 der von der Abdeckung 30 abgedeckten Batteriezellen 40 hindurchführbar ist. Mit anderen Worten ausgedrückt, weist die Abdeckung 30 in diesem Ausführungsbeispiel rein beispielhaft je Batteriezelle 40 zwei Aussparungen 11 auf, durch welche sich jeweils die Batteriezellenterminals 39 der Batteriezellen 40 hindurchführen lassen, sodass die Abdeckung 30 lose auf den Batteriezellenterminals 39 der Batteriezellen 40 fixierbar ist.

In diesem Ausführungsbeispiel besteht die Abdeckung 30 vollständig aus einem chemisch beständigen, wärmeisolierenden und wärmereflektierenden Material, bei welchem es sich in diesem Ausführungsbeispiel rein beispielhaft um eine Hochtemperaturkeramik, welche Zirkonerde, also Zirkonoxid, umfasst, handelt. Es können allerdings auch erfindungsgemäße Batterien 60 ausgeführt sein, in welchen die Abdeckung 30 nur teilweise oder aber auch gar nicht aus einer Hochtemperaturkeramik besteht. Beispielsweise kann die Abdeckung 30 einer erfindungsgemäßen Batterie 60 auch aus einem Aerogel, welches optional beispielsweise Siliziumdioxid und/oder Polyimide umfasst, oder aber auch aus einem ganz anderen Stoff beziehungsweise Material vollständig oder zumindest teilweise bestehen. Ferner muss es sich bei dem Material, welches für die Ausführung der Abdeckung 30 gewählt wird, auch nicht zwingend um ein chemisch beständiges oder wärmeisolierendes beziehungsweise wärmereflektierendes Material handeln.

## Patentansprüche

1. Batterie (60), umfassend
- mindestens zwei nebeneinander angeordnete Batteriezellen (40), welche jeweils in einem Batteriezellengehäuse (41) angeordnet sind und jeweils mindestens ein Batteriezellenterminal (39) aufweisen,
- je Batteriezelle (40) ein Entgasungselement (35), welches jeweils innerhalb des der jeweiligen Batteriezelle (40) zugehörigen Batteriezellengehäuses (41) angeordnet und dazu ausgebildet ist, innerhalb der jeweiligen Batteriezelle (40) entstehende Gase bei Vorliegen eines vorbestimmten Gasdruckes aus der jeweiligen Batteriezelle (40) abzulassen,
- eine Abdeckung (30), welche dazu ausgebildet ist, zumindest einen Teil der Oberflächen der Batteriezellen (40) abzudecken sowie die Entgasungselemente (35) der Batteriezellen (40) luftdicht abzudecken,
**dadurch gekennzeichnet, dass**
- die Abdeckung (30) jeweils im Bereich der Entgasungselemente (35) den Entgasungselementen (35) zuordenbare Sollbruchstellen (10) aufweist, **dadurch gekennzeichnet, dass** die Abdeckung (30) zumindest teilweise aus einem chemisch beständigen Material besteht oder die Abdeckung (30) zumindest teilweise aus einem wärmeisolierenden und/oder wärmereflektierenden Material besteht, wobei das Material für die Abdeckung (30) gewählt ist aus einer Gruppe umfassend Aerogele und Keramiken.

2. Batterie (60) nach Anspruch 1, wobei die Sollbruchstellen (10) jeweils dazu ausgebildet sind zu brechen, sobald es zu einem Ablassen von Gas durch das der jeweiligen Sollbruchstelle (10) zugehörige Entgasungselement (35) kommt.

3. Batterie (60) nach einem der vorhergehenden Ansprüche, wobei die Sollbruchstellen (10) durch Perforierungen innerhalb der Abdeckung (30) realisiert sind.

4. Batterie (60) nach Anspruch 1 oder 2, wobei die Sollbruchstellen (10) durch lokale Verkleinerungen der Dicke der Abdeckung (30) realisiert sind.

5. Batterie (60) nach Anspruch 4, wobei die Sollbruchstellen (10) durch lokale Minimierungen der Dicke der Abdeckung (30) realisiert sind.

6. Batterie (60) nach einem der vorhergehenden Ansprüche, wobei die Sollbruchstellen (10) als inselartige Abschnitte der Abdeckung (30) ausgeführt sind, welche die den Sollbruchstellen (10) zuordenbaren Entgasungselemente (35) jeweils zumindest teilweise überdecken.

7. Batterie (60) nach einem der vorhergehenden Ansprüche, wobei die Abdeckung (30) die Form einer Platte aufweist.

8. Batterie (60) nach einem der vorhergehenden Ansprüche, wobei die Abdeckung (30) Aussparungen (11) aufweist, durch welche jeweils ein Batteriezellenterminal (39) der von der Abdeckung (30) abgedeckten Batteriezellen (40) hindurchführbar ist.

9. Kraftfahrzeug mit einer Batterie (60) nach einem der Ansprüche 1 bis 8, wobei die Batterie (60) mit einem Antriebssystem des Kraftfahrzeugs verbunden ist.

## Claims

1. Battery (60), comprising
- at least two battery cells (40) which are arranged adjacent to one another and which are each arranged in a battery cell housing (41) and each have at least one battery cell terminal (39),
- one degasification element (35) per battery cell (40), said degasification element being arranged in each case within the battery cell housing (41) associated with the respective battery cell (40) and being designed to discharge gases generated within the respective battery cell (40) from the respective battery cell (40) in the presence of a predetermined gas pressure,
- a cover (30) which is designed to cover at least a part of the surfaces of the battery cells (40) and cover the degasification elements (35) of the battery cells (40) in air-tight fashion,
**characterized in that**
- the cover (30) has, in each case in the region of the degasification elements (35), predetermined breaking points (10) that can be assigned to the degasification elements (35), **characterized in that** the cover (30) is composed at least partially of a chemically resistant material or the cover (30) is composed at least partially of a heat-insulating and/or heat-reflective material, wherein the material for the cover (30) is selected from a group comprising aerogels and ceramics.

2. Battery (60) according to Claim 1, wherein the predetermined breaking points (10) are each designed to break when gas is discharged through the degasification element (35) associated with the respective predetermined breaking point (10).

3. Battery (60) according to one of the preceding claims, wherein the predetermined breaking points (10) are realized by perforations within the cover (30).

4. Battery (60) according to Claim 1 or 2, wherein the predetermined breaking points (10) are realized by local reductions in the thickness of the cover (30).

5. Battery (60) according to Claim 4, wherein the predetermined breaking points (10) are realized by local minimizations of the thickness of the cover (30).

6. Battery (60) according to one of the preceding claims, wherein the predetermined breaking points (10) are in the form of island-like sections of the cover (30) which in each case at least partially cover the degasification elements (35) that can be assigned to the predetermined breaking points (10).

7. Battery (60) according to one of the preceding claims, wherein the cover (30) is in the form of a plate.

8. Battery (60) according to one of the preceding claims, wherein the cover (30) has cutouts (11) through which in each case one battery cell terminal (39) of the battery cells (40) covered by the cover (30) can extend.

9. Motor vehicle having a battery (60) according to one of Claims 1 to 8, wherein the battery (60) is connected to a drive system of the motor vehicle.

## Revendications

1. Batterie (60), comprenant :
- au moins deux éléments de batterie (40) disposés côte à côte, qui sont respectivement disposés dans un logement d'élément de batterie (41) et qui comportent respectivement au moins une borne d'élément de batterie (39),
- chaque élément de batterie (40) comprend un élément de dégazage (35) qui est respectivement disposé à l'intérieur du logement d'élément de batterie (41) associé à l'élément de batterie respectif (40) et est conçu pour libérer hors de l'élément de batterie respectif (40) des gaz se dégageant à l'intérieur de l'élément de batterie respectif (40) lors de la présence d'une pression de gaz prédéterminée,
- un couvercle (30) qui est conçu pour recouvrir au moins une partie des surfaces des éléments de batterie (40) ainsi que pour recouvrir de manière étanche à l'air les éléments de dégazage (35) des éléments de batterie (40),
**caractérisée en ce que**
- le couvercle (30) comporte respectivement, dans la région des éléments de dégazage (35), des points de rupture (10) pouvant être associés aux éléments de dégazage (35),
**caractérisée en ce que** le couvercle (30) est au moins partiellement constitué d'un matériau chimiquement résistant ou **en ce que** le couvercle (30) est au moins partiellement constitué d'un matériau thermiquement isolant et/ou réfléchissant la chaleur, dans laquelle le matériau destiné au couvercle (30) est sélectionné dans un groupe comprenant des aérogels et des céramiques.

2. Batterie (60) selon la revendication 1, dans laquelle les points de rupture (10) sont respectivement conçus pour se rompre dès qu'il se produit un dégagement de gaz à travers l'élément de dégazage (35) associé aux points de rupture respectifs (10).

3. Batterie (60) selon l'une quelconque des revendications précédentes, dans laquelle les points de rupture (10) sont réalisés par des perforations à l'intérieur du couvercle (30).

4. Batterie (60) selon la revendication 1 ou 2, dans laquelle les points de rupture (10) sont réalisés par des diminutions locales de l'épaisseur du couvercle (30).

5. Batterie (60) selon la revendication 4, dans laquelle les points de rupture (10) sont réalisés par des minimisations locales de l'épaisseur du couvercle (30).

6. Batterie (60) selon l'une quelconque des revendications précédentes, dans laquelle les points de rupture (10) sont mis en oeuvre sous la forme de sections de type îlots dans le couvercle (30), lesquelles sections recouvrent respectivement au moins partiellement les éléments de dégazage (35) pouvant être associés aux points de rupture (10).

7. Batterie (60) selon l'une quelconque des revendications précédentes, dans laquelle le couvercle (30) présente la forme d'une plaque.

8. Batterie (60) selon l'une quelconque des revendications précédentes, dans laquelle le couvercle (30) présente des évidements (11) à travers lesquels une borne d'élément de batterie (39) respective de l'élément de batterie (40) recouvert par le couvercle (30) peut être insérée.

9. Véhicule à moteur comportant une batterie (60) selon l'une quelconque des revendications 1 à 8, dans lequel la batterie (60) est connectée à un système d'entraînement du véhicule à moteur.
